Europäisches Patentamt

European Patent Office

Office européen des brevets

(11) Publication number: **0 444 351 A2**

## EUROPEAN PATENT APPLICATION

(21) Application number: 90313662.0

(51) Int. Cl.⁵: **G06F 1/00**

(22) Date of filing: 14.12.90

(30) Priority: 28.02.90 US 486583

(43) Date of publication of application:
04.09.91 Bulletin 91/36

(84) Designated Contracting States:
DE FR GB IT NL

(71) Applicant: **AMERICAN TELEPHONE AND TELEGRAPH COMPANY**
**550 Madison Avenue**
**New York, NY 10022(US)**

(72) Inventor: **Flanagan, James Loton**
**26 Wolf Hill Drive, Warren**
**New Jersey 07060(US)**

(74) Representative: **Watts, Christopher Malcolm**
**Kelway et al**
**AT&T (UK) LTD. AT&T Intellectual Property**
**Division 5 Mornington Road**
**Woodford Green Essex IG8 OTU(GB)**

(54) Voice password-controlled computer security system.

(57) A voice password-controlled security system is disclosed. After the normal password procedure is successfully completed, the computer (12) institutes a voice call to a telephone (13) associated with the user. The computer queries the user to repeat a randomly selected series of digits or a phrase consisting of a group of words. The computer then compares the voice information received over the voice line with pre-stored voice information associated with the purported user. The computer affords access to its resources if and only if a voice match occurs. Due to the high reliability of the voice recognition system, intruders, even those with password information and who mimic the user's voice, will usually be precluded access to the computer. Significantly, the system is effective yet places no additional burdens on the user, such as memorizing additional codes or carrying encryption devices.

FIG. 1

## Technical Field

This invention relates to computer system security and, in particular, to password-controlled computer systems.

## Background of the Invention

In many industries, computers are relied upon to store and process highly sensitive information. The banking industry uses computers to control fund transfers and the dispensing of cash at automated teller machines. The telecommunication industry uses computers to establish call connections around the globe as well as to process associated billing information. Other industries control inventory, generate bills, and control medical instruments all through the use of computers. Naturally, such computers are inviting targets to interlopers -- both the professional variety who seeks access for profit and the so-called "hacker" who purportedly seeks access for fun and glory.

Typically, security in computer systems has been instituted through the use of preassigned passwords. In response to a computer query, a user who supplies the correct password is given access to the computer system, while one who fails to provide the the password is not afforded such access. The use of passwords is generally effective, yet is often easily defeated mainly due to human failings. Users, to avoid forgetting their password, sometimes write it down in a convenient place -- like on the back of their automatic teller card or on the terminal itself. Moreover, they often select passwords that are equally obvious: their first or last name, their social security number, their children's name, their home address or their telephone number. Moreover, certain operating systems provide standard passwords (e.g., "install") which should be changed by the System Administrator during the initial installation of the computer system. However, many Systems Administrators fail to change these standard passwords leaving their systems particularly vulnerable. In short, the security of password-controlled systems is often breached because interlopers find passwords or are able to quickly guess passwords with a few intelligent choices. To help overcome these problems, security in password controlled systems have been augmented by a user-controlled calculator-like device, adapted to execute a secret encryption algorithm. After the computer receives a valid password, it sends a number to the terminal of the user. The user then manually enters this number into the calculator. The calculator then automatically executes the secret algorithm to generate an output number. The user enters the output number and the computer compares this number with a similar number it generates internally using the same algorithm. A match indicates that the user possesses this unique encryption calculator and access to the computer is provided. This system is highly effective, except obviously where the intruder has both the password and the calculator.

The basic problem with these security systems, however, is that they allow access by a user without ascertaining his or her true identity -- i.e., without establishing some personal uniqueness, such as through fingerprints, DNA criteria or, as in the present invention, voice characteristics.

## Summary of the Invention

The foregoing problem is solved by a voice password-controlled security system. After the normal password procedure is successfully completed, the computer institutes a voice call to a telephone associated with the user. The computer queries the user to repeat a randomly selected series of digits or a phrase consisting of a group of words. The computer then compares the voice information received over the voice line with pre-stored voice information associated with the purported user. The computer affords access to its resources if and only if a voice match occurs. Due to the high reliability of the voice recognition system, intruders, even those with password information and who mimic the user's voice, will usually be precluded access to the computer. Significantly, the system is effective yet places no additional burdens on the user, such as memorizing additional codes or carrying encryption devices.

In accordance with an embodiment of the invention, a voice password-controlled computer system first queries a user for a "login" and then a "password" at a terminal. If the user enters a login and password at the terminal corresponding to those of a user entitled to access the computer, the computer then requests the user at the terminal to provide a telephone number identifying a voice telephone in proximity to the user. Alternatively, in more secure environments, a voice telephone number may be preassigned for that user to ensure that the user is at a particular telephone before computer access in afforded. The computer then institutes a "voice" call to the telephone identified by the received or preassigned telephone number and then orally requests the user to repeat a series of randomly selected digits, such as "one" "seven" "five" "one". Using a voice recognition technique, the computer matches received voice information with pre-stored voice information for the user and generates a confidence recognition factor indicating how closely the received voice matches the stored voice of the user. If the factor exceeds a preset threshold, the user is afforded access to the computer. The voice line is dropped since it is no longer needed.

In accordance with a feature of the invention, the digits or words are chosen at random to prevent an intruder from merely tape recording a prior voice session and playing it back over the voice line to deceive the computer.

## Brief Description of the Drawings

FIG. 1 illustrates in block diagram form, a voice password-controlled computer security system embodying the principles of the instant invention.

FIG. 2 sets forth in greater detail the voice apparatus and programmed processor shown in Fig. 1.

FIGS. 3 and 4 illustrate flow charts of the operation of the system shown in FIG. 1 in accordance with the principles of the invention.

FIG. 5 sets forth an illustrative section of the data base stored in the memory of the program processor shown in FIG. 2.

## Detailed Description

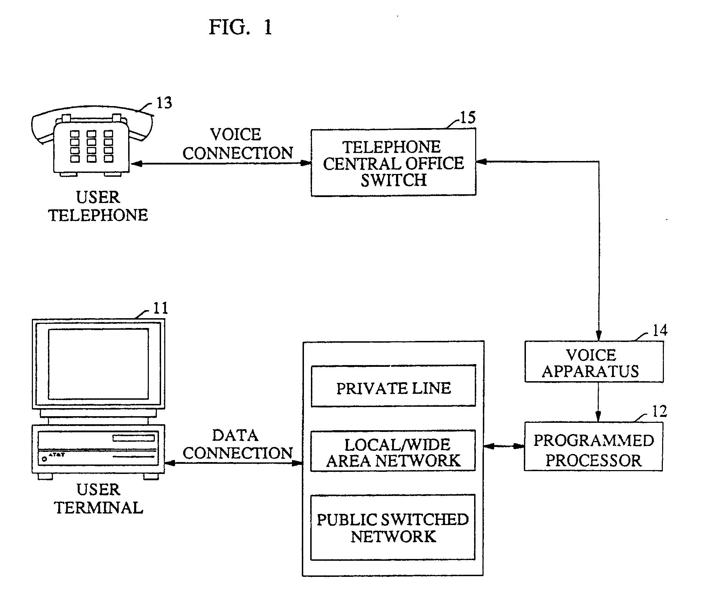

In accordance with the illustrative embodiment of this invention, user terminal 11 in FIG. 1-- which may be a personal computer, a terminal or other peripheral device with a keyboard and a display -- establishes a data connection to programmed processor 12 in the normal manner. This data connection may, as shown in FIG. 1, be over a private line, a local area network, a wide area network, or even over the public switched network using a modem. Indeed, the user terminal may even be directly connected locally to the processor. Programmed processor 12 may be any type of general purpose computer comprising memory, a central processing unit and ports through which remote terminals may establish data connections. In this illustrative embodiment, processor 12 is a 3B2-1000 computer manufactured by AT&T and running the UNIX™ operating system.

Processor 12, in response to the initiation of a bidirectional data connection by terminal 11, provides a "LOGIN" prompt to the user at the terminal. The user then enters his or her login which identifies the user, and processor 12 then prompts the user to enter a "PASSWORD". If the login and password information input by the user, match pre-stored login and password information maintained in memory by processor 12, the processor then independently attempts to establish a voice connection to user telephone 13-- which ideally is in close physical proximity to user terminal 11. This voice connection can be established either to a pre-assigned telephone number associated with the user or to a telephone number input by the user at terminal 11 in response to a query by processor 12. This bidirectional voice connection is established in the normal manner through telephone central office switch 15 to user telephone 13. Although the voice connection is shown as a distinct physical path from the data connection, it need not be physically separate. Using present ISDN technology, the voice connection and the data connection can be over the same physical medium. Moreover, the voice connection could just as readily be "hard-wired" to a locally associated processor 12. After establishment of the voice connection, processor 12 generates a 4-digit random number (e.g., 5772) and controls voice apparatus 14 to request the user to repeat the 4-digit number into the user telephone 13 (e.g., "After the tone, please speak the following numbers in sequence: five, seven, seven, two"). Alternatively, processor 12 could query the user by providing this same message in text form to the user via terminal 11. Processor 12 then compares the speech embodied in the received 4-digit number with the user's stored reference speech for the 4-digit number. A confidence recognition factor indicating the closeness of the match of the received speech patterns with the stored reference patterns is assigned to the received speech. This factor is then compared with a pre-determined threshold value established to identify valid "voice passwords." If the confidence recognition factor is greater than the threshold value, the user is afforded access to processor 12 and may request the transfer of funds or access to a proprietary data base or other functions provided by the processor. The voice connection to telephone 13 is dropped since it is no longer needed.

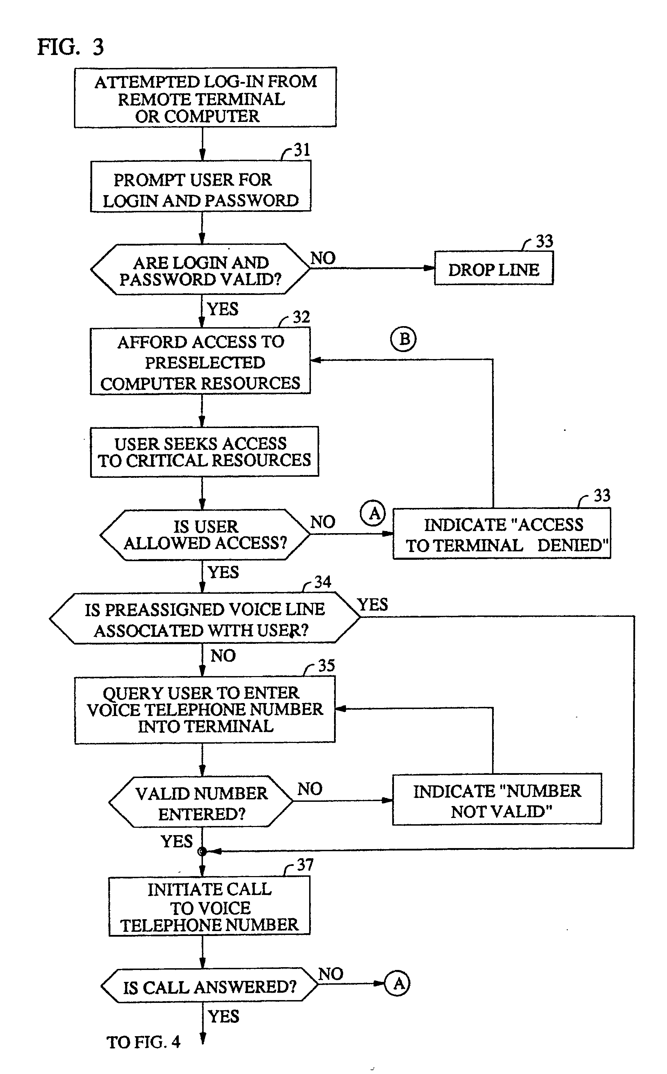

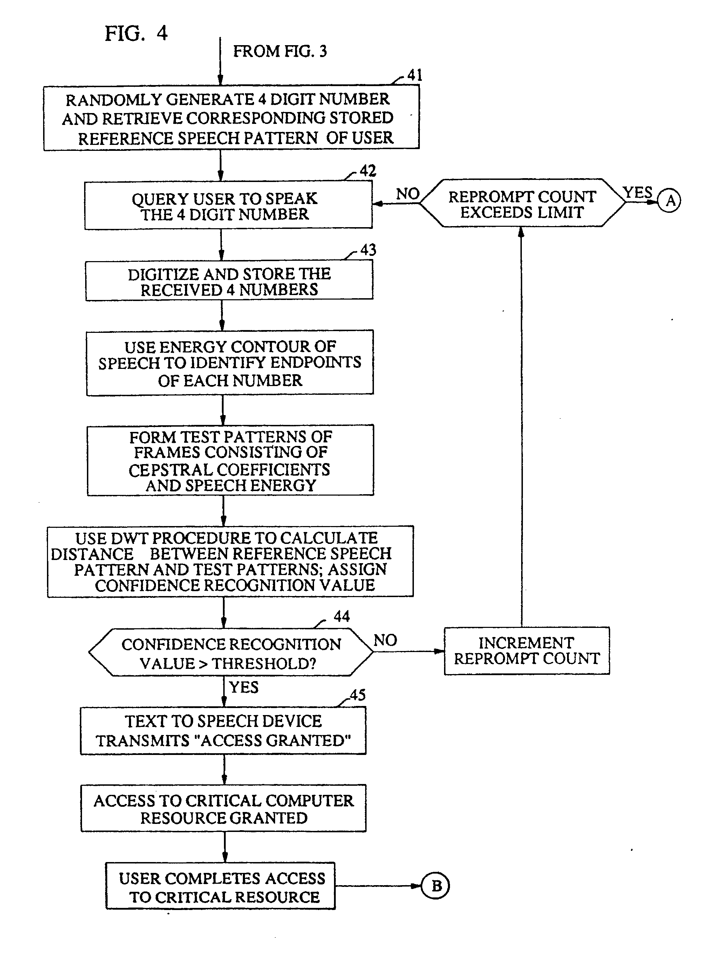

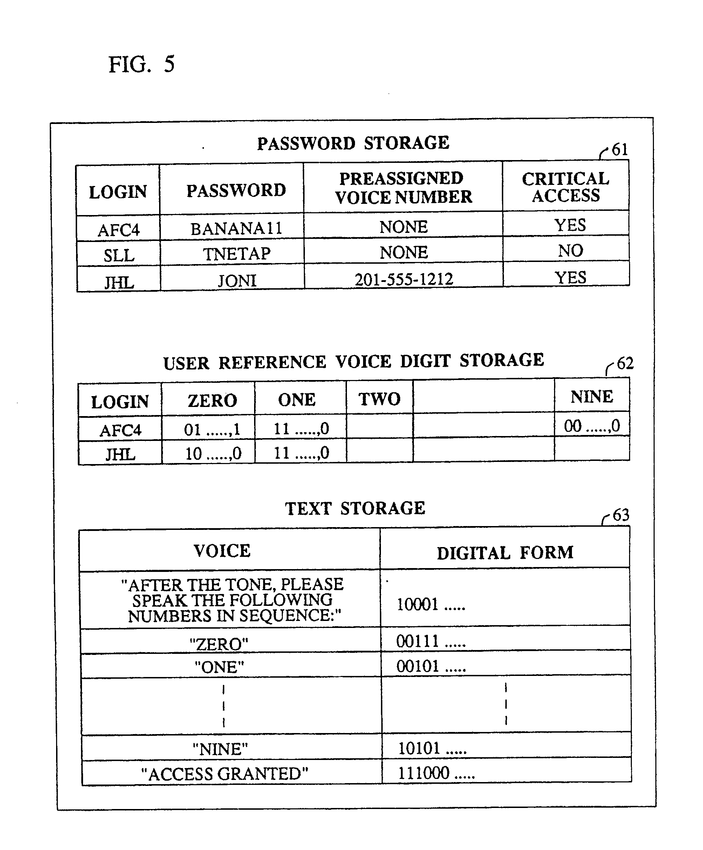

The operation of the illustrative embodiment shown in FIG. 1 will now be described in greater detail with reference to the flow diagram of FIGS. 3 and 4 and the illustrative data shown in FIG. 5. We will assume that the user associated with login AFC4 in FIG. 5 is at user terminal 11 in FIG. 1 and wishes to access certain restricted programs in programmed processor 12. The user associated with login AFC4 initiates a data connection to processor 12 in the manner described above. Processor 12 then prompts the user first for a login and then for a password, step 31 in FIG. 3. If incorrect login or password information is entered by the user, processor 12 will terminate the session by dropping the data connection, step 33. However, if the user enters login "AFC4", and password "BANANA11", processor 12, upon determining that a match occurs since the same login and password are stored in table 61 of FIG. 5, will afford the user access to pre-selected, non-critical computer resources, step 32 in FIG. 3. Such resources may be certain non-proprietary programs, or certain devices such as printers. Alternatively, such resources may, in fact, constitute no resources at all in systems containing highly sensitive information. Thus, the system administrator for processor 12 should make a determination whether to protect the security of the whole computer system by requiring voice identification for all users; whether to only require such voice identification when a user attempts to access certain sensitive programs, such as a data base, or external links to other networked computers; or whether to only require voice identification for certain users and not others. One such illustrative determination by the system administrator is reflected in the column entitled "critical access" in table 61 of FIG. 5. Users AFC4 and JHL are entitled to access critical resources, such as a highly confidential Informix data base, which are protected by voice identification as hereinafter explained, while SLL is not entitled to any access whatsoever to such critical resources.

If user AFC4 seeks access to the Informix data base by entering the code "isql", processor 12 will first ascertain by reference to table 61 in FIG. 5, whether such access is allowed. Here, user AFC4 is entitled to such critical access. User SLL, on the other hand, is not entitled to access and would be so apprised at step 36 in FIG. 3 by the words "ACCESS DENIED".

With respect to the "isql" access request by user AFC4, processor 12 next ascertains whether or not a voice telephone number has been preassigned, step 34, by accessing the information in the column entitled "preassigned voice number" in table 61. Pre- assigning a voice telephone number associated with a particular user (e.g., user "JHL") is highly effective in precluding access from any other physical location. However, if the System Administrator did not wish to so limit remote access for a particular user such as for AFC4, no preassigned voice number would be stored in the password storage table in FIG. 5. Processor 12 therefore queries user terminal 11 for a telephone number of a voice telephone located near the terminal, step 35, FIG. 3.

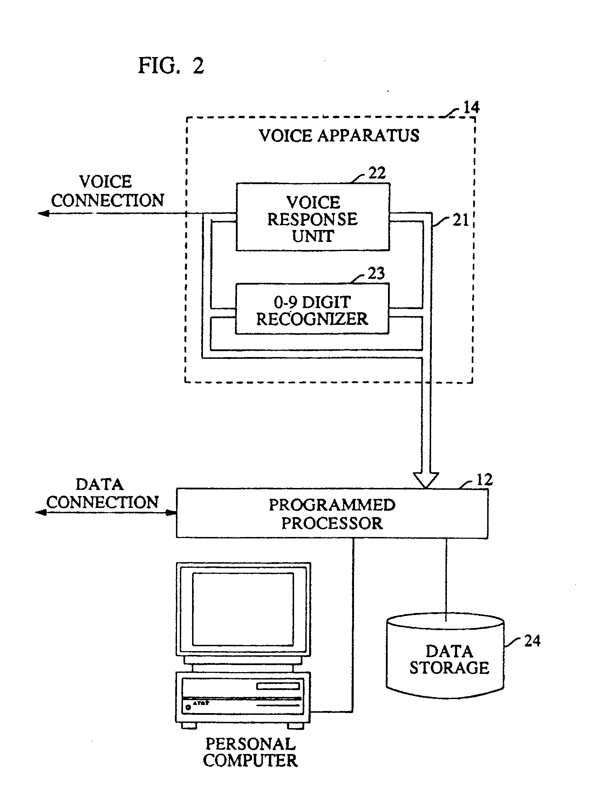

Processor 12, upon receiving a voice telephone number entered from user terminal 11, uses a lookup table to ascertain the validity of the entered number. This validity check can be used to ensure that telephone calls are only completed to certain telephone numbers, telephone exchanges, or area codes -- another security feature. If the received number is valid, processor 12 initiates a voice telephone call to user telephone 13 via voice apparatus 14, shown in greater detail in FIG. 2.

Voice apparatus 14 comprises voice response unit 22 and digit recognizer 23-- both interconnected by bus 21 and controlled by processor 12. To provide speech output, processor 12 provides stored text in a digital format to voice response unit 22, which using a digital to analog converter generates speech. Typically, phrases such as "access granted", "nine", "after the tone ...", are stored in data storage device 24 in a digital format as shown in table 63 in FIG. 5. Processor 12 generates and provides speech to a user by providing such digital information over bus 21 to voice response unit 22, and controlling unit 22 to output the speech over the voice connection shown in FIG. 2. Digits spoken by a user are detected by digit recognizer 23, which includes an analog to digital convertor for converting received spoken digits into a digital format and for conveying the digital information, upon request to processor 12 via bus 21.

If the call to user telephone 13 is answered and a voice connection established (step 37, FIG. 3), processor 12 randomly generates a 4-digit number (step 41, FIG. 4) and retrieves from data storage 24 the four corresponding stored reference speech digits for the user. If the random number were "9102", processor 12 would retrieve from table 62 in FIG. 6 for user AFC4, the digital information corresponding to "NINE" "ONE" ZERO" and "TWO". Processor 12 also retrieves binary information from table 63 representing the phrase "After the tone, please speak the following number in sequence" and routes it over bus 21 to voice response unit 22, which converts the binary information to speech. The binary information representing each of the four digits of the randomly chosen number "9102" is also retrieved from table 63 and conveyed in sequence over bus 21 to unit 22 where it is also converted to speech. Thus user AFC4, (step 42, FIG. 4) is asked over the voice connection in FIG. 1 to repeat the digits "9102" into user telephone 13. User AFC4 then repeats the digits "9102" into telephone 13 for conveyance over the voice connection. Digit recognizer 23 in FIG. 2 digitizes the speech (step 43) and conveys the received speech to processor 12. Processor 12 utilizing a well-known process, uses energy contours of the received speech to identify end points of each number, forms test patterns of frames consisting of cepstral co-efficients and speech energy. A DTW procedure then calculates the distance between the referenced speech pattern for user AFC4, which was retrieved previously, and the received test pattern and assigns a confidence recognition value thereto. If the calculated value is greater than a pre-set threshold (step 44), processor 12 retrieves the phrase "access granted" from table 63 in FIG. 5, and transmits it via voice response unit 22 to user telephone 13 (step 45). The voice connection is then dropped and the user is afforded access to the requested critical computer resource -- the Informix database.

Although the instant embodiment has been described in terms of a randomly selected 4-digit number, the voice-password security system works well with non-numeric phrases. The user reference voice storage 62 in FIG. 6 could, for example, comprise a series of commonly used phrases such as "the" "rain" "in" "Spain" "falls" "mainly" "on" "the" "plain" and "now" "is" "the" "time" "for" "all" "good" "men" "to" "come" "to" "the" "aid" "of" "their" "party". With this vocabulary, the computer could query a user to repeat one of the following phrases: "The time for Spain is now" or "The men come to the party in Spain" or "rain, men, party."

It is obvious from the foregoing that the security of a computer system may be substantially enhanced by the described voice password system. While the instant invention has been disclosed with respect to a general purpose computer, it should be understood that such an embodiment is intended to be illustrative of the principles of the invention and that numerous other arrangements, such as a computer system dedicated to a specific use (e.g., automated teller machine functions), may be devised by those skilled in the art without departing from the spirit and scope of the invention.

## Claims

1. In a computer system in which a user at a terminal attempts to gain access to a computer storing preassigned password information and voice information associated with the user, the combination comprising

   means responsive to entry by the user of said preassigned password information at said terminal for initiating a voice connection to a telephone associated with the user,

   means for querying the user over said voice connection to speak a series of words into said telephone, and

   means for comparing words spoken by the user over said voice connection with said stored voice information and operable, upon a match thereof, to afford access to said computer by said terminal.

2. The combination set forth in claim 1 where said querying means comprises means for randomly selecting said series of words.

3. In a computer system in which a user at a video display unit attempts to gain access to a computer connected thereto, the combination comprising

   means for storing a preassigned password identification associated with the user and a plurality of phrases spoken by the user,

   means responsive to an attempt by the user to gain access to the computer for querying the user for password identification,

   means for comparing password identification entered by the user at the video display unit with said preassigned password identification and operable, upon a match thereof, for querying the user to identify a telephone,

   means for initiating a telephone connection to the identified telephone,

   means for randomly selecting a series of phrases spoken by the user from said storing means,

   means for requesting the user over said telephone connection to repeat said randomly selected series of phrases, and

   means for comparing phrases spoken by the user over said telephone connection with said stored randomly selected series of phrases and operable, upon a match thereof, for granting access to said computer by the user via said video display unit.

4. The method of preventing an unauthorized user at a terminal from accessing a computer system comprising

   comparing password information identifying a user and received from the terminal with password information for the user stored in the computer,

   only upon successfully matching the received and stored password information, establishing a voice connection to a telephone associated with the user,

   querying the user over the voice connection to speak a series of phrases,

   comparing the spoken phrases with stored voice information associated with the user, and

   only upon successfully matching the spoken phrases with the stored voice information, granting the terminal access to the computer.

5. The method of preventing an unauthorized user at a terminal connected to a computer from achieving access thereto, comprising the steps of:

   querying the user at the terminal to provide password information,

   comparing received password information with stored password information to determine the validity of the received information,

   upon determining that the received password is valid, querying the user to identify a telephone,

   establishing a voice connection to the telephone identified by the user,

   randomly selecting a series of phrases,

   querying the user over the voice connection to repeat said series of phrases,

receiving phrases over the voice connection from the user,

comparing said received phrases with corresponding stored phrases spoken by the user and maintained in said computer, and

only upon successfully matching said received and stored phrases, granting the terminal access to the computer.

6. A method of providing security in a computer system comprising the steps of

storing spoken phrases of a user,

subsequently prompting a user to enter voice phrases selected from said stored phrases and

comparing phrases spoken by the user with the same stored phrases of the user and operable upon a match thereof for affording access to secured resources in the computer system.

7. The method in accordance with claim 6 in which the voice phrases are randomly selected.

8. The method of operating a computer system storing unique password and voice access commands comprising the steps of

prompting a user first to enter the unique password and then to enter through speech selected of the access commands,

comparing entered information first with the stored password and then with the stored selected voice access commands and operable upon a match of the entered information with both for affording access to resources in the computer system.

9. A computer system adapted to store voice phrases comprising

means for selecting a series of voice phrases associated with a user of the computer system and stored therein,

means for prompting a user to verbally enter the selected series of phrases into the computer system,

means for comparing the series of phrases verbally entered by the user with the selected stored series of phrases and operable upon a match thereof for enabling the user to access resources of the computer system.

10. The computer system of claim 9 wherein said selecting means randomly selects said series of voice phrases from the stored phrased associated with the user of the computer system.

11. The computer system of claim 9 wherein said selecting means uses an algorithm to select said series of voice phrases from the stored phrases associated with the user of the computer system.

## FIG. 1

VOICE
CONNECTION

USER
TELEPHONE

TELEPHONE
CENTRAL OFFICE
SWITCH

DATA
CONNECTION

USER
TERMINAL

PRIVATE LINE

LOCAL/WIDE
AREA NETWORK

PUBLIC SWITCHED
NETWORK

VOICE
APPARATUS

PROGRAMMED
PROCESSOR

FIG. 2

VOICE APPARATUS — 14

VOICE CONNECTION

VOICE RESPONSE UNIT — 22

0-9 DIGIT RECOGNIZER — 23

21

DATA CONNECTION

PROGRAMMED PROCESSOR — 12

PERSONAL COMPUTER

DATA STORAGE — 24

## FIG. 3

```
┌─────────────────────────┐
│  ATTEMPTED LOG-IN FROM  │
│     REMOTE TERMINAL     │
│       OR COMPUTER       │
└─────────────────────────┘
             │
             ▼                      ⌐31
┌─────────────────────────┐
│     PROMPT USER FOR     │
│   LOGIN AND PASSWORD    │
└─────────────────────────┘
             │
             ▼                                          ⌐33
      ╱ ARE LOGIN AND ╲      NO      ┌─────────────┐
     ⟨ PASSWORD VALID? ⟩──────────▶  │  DROP LINE  │
      ╲               ╱              └─────────────┘
             │
            YES
             │                ⌐32
             ▼                                    (B)
┌─────────────────────────┐
│    AFFORD ACCESS TO     │◀──────────────────────┐
│      PRESELECTED        │                        │
│  COMPUTER RESOURCES     │                        │
└─────────────────────────┘                        │
             │                                      │
             ▼                                      │
┌─────────────────────────┐                        │
│    USER SEEKS ACCESS    │                        │
│   TO CRITICAL RESOURCES │                        │
└─────────────────────────┘                        │
             │                                      │
             ▼                                    ⌐33
      ╱    IS USER    ╲    NO   (A) ┌──────────────────────────┐
     ⟨ ALLOWED ACCESS? ⟩─────────▶ │   INDICATE "ACCESS       │
      ╲               ╱            │  TO TERMINAL   DENIED"   │
             │                     └──────────────────────────┘
            YES
             │                  ⌐34
             ▼                         YES
    ╱ IS PREASSIGNED VOICE LINE ╲─────────────────────────┐
   ⟨  ASSOCIATED WITH USER?      ⟩                         │
    ╲                           ╱                          │
             │                                             │
             NO                                            │
             │              ⌐35                            │
             ▼                                             │
┌─────────────────────────┐                               │
│   QUERY USER TO ENTER   │◀──────────────────┐           │
│ VOICE TELEPHONE NUMBER  │                    │           │
│      INTO TERMINAL      │                    │           │
└─────────────────────────┘                    │           │
             │                                  │           │
             ▼                                  │           │
      ╱  VALID NUMBER  ╲   NO   ┌──────────────────────┐   │
     ⟨    ENTERED?      ⟩─────▶ │  INDICATE "NUMBER    │   │
      ╲               ╱         │     NOT VALID"       │   │
             │                  └──────────────────────┘   │
            YES                                             │
             │◀────────────────────────────────────────────┘
             ▼                  ⌐37
┌─────────────────────────┐
│     INITIATE CALL       │
│       TO VOICE          │
│  TELEPHONE NUMBER       │
└─────────────────────────┘
             │
             ▼
      ╱                 ╲   NO
     ⟨ IS CALL ANSWERED? ⟩──────▶ (A)
      ╲                 ╱
             │
            YES
             │
             ▼
TO FIG. 4
```

## FIG. 4

FROM FIG. 3

41 — RANDOMLY GENERATE 4 DIGIT NUMBER AND RETRIEVE CORRESPONDING STORED REFERENCE SPEECH PATTERN OF USER

42 — QUERY USER TO SPEAK THE 4 DIGIT NUMBER

43 — DIGITIZE AND STORE THE RECEIVED 4 NUMBERS

USE ENERGY CONTOUR OF SPEECH TO IDENTIFY ENDPOINTS OF EACH NUMBER

FORM TEST PATTERNS OF FRAMES CONSISTING OF CEPSTRAL COEFFICIENTS AND SPEECH ENERGY

USE DWT PROCEDURE TO CALCULATE DISTANCE BETWEEN REFERENCE SPEECH PATTERN AND TEST PATTERNS; ASSIGN CONFIDENCE RECOGNITION VALUE

44 — CONFIDENCE RECOGNITION VALUE > THRESHOLD?

YES

45 — TEXT TO SPEECH DEVICE TRANSMITS "ACCESS GRANTED"

ACCESS TO CRITICAL COMPUTER RESOURCE GRANTED

USER COMPLETES ACCESS TO CRITICAL RESOURCE — B

NO — REPROMPT COUNT EXCEEDS LIMIT — YES — A

NO — INCREMENT REPROMPT COUNT

## FIG. 5

### PASSWORD STORAGE 61

| LOGIN | PASSWORD | PREASSIGNED VOICE NUMBER | CRITICAL ACCESS |
|---|---|---|---|
| AFC4 | BANANA11 | NONE | YES |
| SLL | TNETAP | NONE | NO |
| JHL | JONI | 201-555-1212 | YES |

### USER REFERENCE VOICE DIGIT STORAGE 62

| LOGIN | ZERO | ONE | TWO | | NINE |
|---|---|---|---|---|---|
| AFC4 | 01 .....,1 | 11 .....,0 | | | 00 .....,0 |
| JHL | 10 .....,0 | 11 .....,0 | | | |

### TEXT STORAGE 63

| VOICE | DIGITAL FORM |
|---|---|
| "AFTER THE TONE, PLEASE SPEAK THE FOLLOWING NUMBERS IN SEQUENCE:" | 10001 ..... |
| "ZERO" | 00111 ..... |
| "ONE" | 00101 ..... |
| | |
| "NINE" | 10101 ..... |
| "ACCESS GRANTED" | 111000 ..... |